# EUROPEAN PATENT SPECIFICATION

(11) **EP 1 671 043 B1**
(45) Date of publication and mention of the grant of the patent: **10.01.2007**
(21) Application number: 03772637.9
(22) Date of filing: 08.10.2003
(51) Int. Cl.: F16D 3/18

(54) **A TRANSMISSION JOINT, IN PARTICULAR FOR TRANSMITTING DRIVE BETWEEN NON-ALIGNED SHAFTS**
ÜBERTRAGUNGSGELENK, INSBESONDERE FÜR DREHMOMENTÜBERTRAGUNG ZWISCHEN NICHT FLÜCHTENDEN WELLEN
ARTICULATION DE TRANSMISSION, NOTAMMENT POUR TRANSMETTRE UNE FORCE D'ENTRAINEMENT ENTRE DEUX ARBRES NON ALIGNES

(43) Date of publication of application: 21.06.2006
(73) Proprietor: GASPARDO SEMINATRICI S.P.A., I-33075 Morsano Al Tagliamento (IT)
(72) Inventor: PLEYER, Peter, 49152 Bad Essen (DE)
(74) Representative: Fabris, Stefano
(86) International application number: PCT/IT2003/000604
(87) International publication number: WO 2005/033536

(56) References cited:
- WO-A-99/66224
- FR-A- 1 041 491
- US-A- 2 780 080
- US-A- 4 824 418

## Description

### Technical field

The present invention relates to a transmission joint according to the preamble to main Claim 1.

Transmission joints of the type indicated are typically used for transmitting drive in particular between non-aligned shafts in applications which require mainly reliability and structural simplicity, such as applications relating to the drive transmissions that are provided on agricultural machines in general.

### Technological background

An example of this type of joint is known from the abstract of published Japanese patent application No. 03079185A. In the joint described therein, the hexagonal profile of the members of the joint that are in mutual engagement ensures torsional coupling and, because of the approximately spheroidal shape of one of the members of the joint and the corresponding housing cavity in the other member of the joint, which cavity extends axially with a cross-section having a hexagonal outline, the drive can also be transmitted between shafts with inclined axes.

Document WO 99/66224 also shows a similar joint.

One of the limitations of the known solutions lies in the fact that, beyond a particular degree of relative inclination between the axes of the joint, because of the geometry of the coupling between the members that are in mutual contact, the transmission of the drive gradually becomes uneven and may lead to the risk of locking of the joint for inclinations which exceed the limits permitted by the geometry provided for the coupling.

### Description of the invention

A main object of the present invention is to provide a transmission joint of the above-mentioned type which ensures correct transmission of the drive within a preselected range of possible angular inclinations between the axes of the joint and which prevents these limits being exceeded, thus preventing locking of the joint.

Another object is to provide a joint which enables the drive to be transmitted between the driven and driving shafts in the presence of relative tensile or compression stresses between the shafts, in particular with stresses which tend to pull the elements of the joint apart.

Yet another object is that of obtaining a joint which is particularly compact as a whole and which has improved structural simplicity and, in particular, which can be produced with a limited number of parts for quick and easy assembly and dismantling of the joint.

These objects, and yet others which will become clear from the following description, are achieved by the invention by means of a transmission joint formed in accordance with the appended claims.

### Brief description of the drawings

Further characteristics and advantages of the invention will become clearer from the following detailed description of a preferred embodiment thereof which is described by way of non-limiting example with reference to the appended drawings, in which:
Figure 1 is an exploded, perspective view of a transmission joint formed in accordance with the present invention,
Figure 2 is a perspective view of the joint of Figure 1 in the assembled condition,
Figure 3 is a partial axial section through the joint of the invention in a first operative condition, with axes of rotation of the joint elements in mutual alignment, and
Figure 4 is a partial axial section through the joint of the previous drawings in a second operative condition, with axes of rotation of the joint elements inclined to one another at the maximum permitted angular inclination.

### Preferred embodiment of the invention

With reference to the drawings mentioned, a transmission joint formed in accordance with the present invention and generally indicated 1 is arranged for transmitting drive between a pair of shafts 2, 3 which are shown only partially in the drawings.

The joint 1 comprises a first joint element and a second joint element which are indicated 4 and 5, respectively, and which can be fixed for rotation with the shafts 2 and 3, respectively, about corresponding axes of rotation X1 and X2.

The first joint element 4 comprises an approximately spheroidal body 6 formed by a plurality of adjacent segment-like portions 6a which are elongate in the direction of the axis X1. The outer surface of each segment-like portion 6a has a curved profile, in particular, of spherical shape and is delimited by opposed edges 7. At the free axial end of the body 6, the edges 7 converge at a common vertex 8 and, at the opposite axial end, the body is extended by a portion 9 of the first joint element which is shaped as a spherical sector 9a and the function of which will become clear from the following description. The spheroidal body 6 has cross-sections (perpendicular to the axis X1) with polygonal profiles and in particular with regular hexagonal geometry.

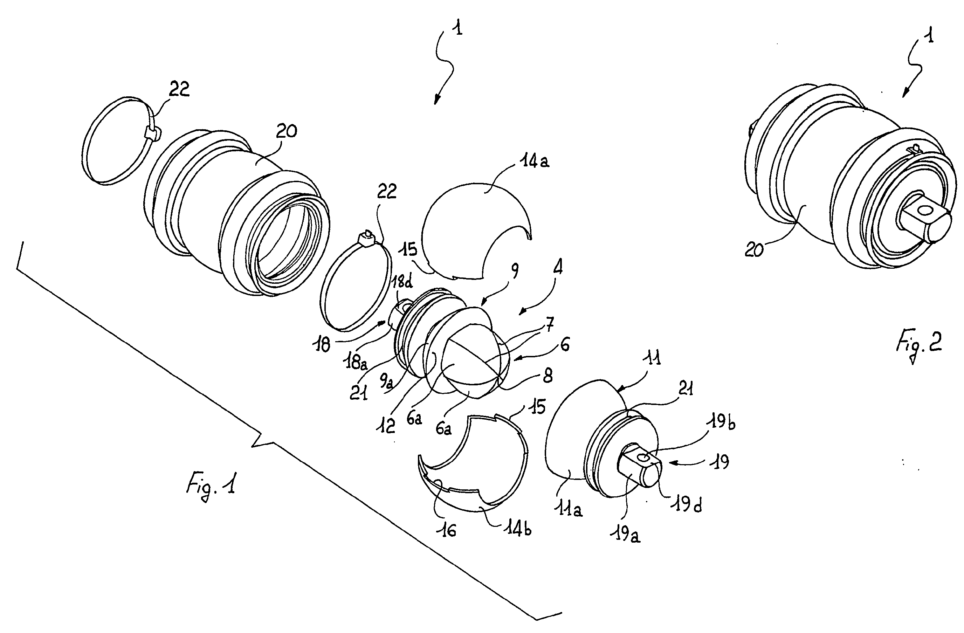

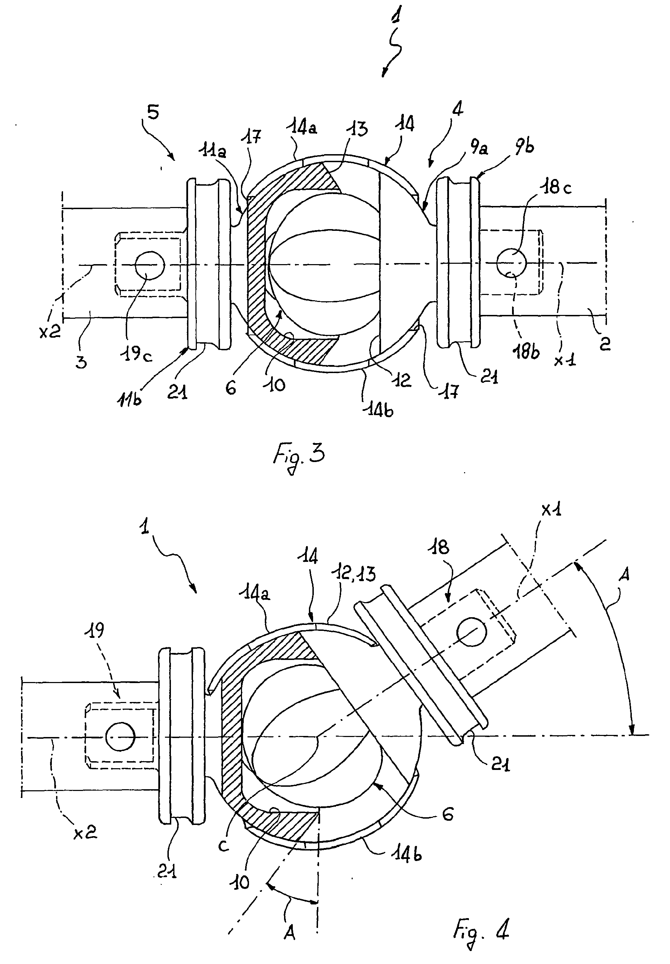

The second joint element 5 comprises a blind axial cavity 10 constituting a seat for housing the body 6. The cavity 10 extends coaxially with the axis X2 with a substantially uniform cross-section (perpendicular to the axis X2) and having a corresponding regular hexagonal profile. This cross-section is selected so as to have a dimension slightly greater than that of the maximum diametral cross-section of the spheroidal body 6 so that the body is housed in the cavity 10 with a small radial clearance between the above-mentioned portions; this is to ensure mutual torsional coupling between the body 6 and the corresponding cavity 10 and at the same time to permit a relative inclination between the axes X1 and X2 (Figure 4) so as to ensure the transmission of drive between one of the joint elements 4, 5 and the other, even with shafts 2, 3 having axes X1, X2 that are inclined to one another.

The blind cavity 10 is formed in a respective portion 11 of the second joint element 5 which is also shaped as a spherical sector 11a.

The spherical regions of the sectors 9a, 11a belong to the same spherical profile of preselected and common radius and may be considered as parts of the same spherical volume, separated by a substantially spherical segment-shaped interruption region.

A shoulder surface 12 is defined on the portion 9 of the first joint element between the said portion and the body 6 (at least partially constituting the base of the spherical sector 9a) and has a flat annular configuration, extending perpendicularly relative to the axis X1. A tapered surface 13 is correspondingly defined on the portion 11 of the second joint element 5. The surface 13 extends around the blind cavity 10 so as to adjoin the spherical sector 11a and has generatrices of the tapered profile which are inclined to the perpendicular to the axis X2 at a preselected angle, indicated A in Figure 4.

The angle A corresponds to the maximum permitted angle of inclination between the axes X1 and X2. In fact, as can clearly be seen from Figure 4, at this maximum inclination, the surfaces 12 and 13 are brought into contact with one another. More particularly, these surfaces are brought into mutual abutment, tangentially relative to one another, with relative rolling of one surface on the other during the rotation of the joint elements about their respective axes. The surfaces 12, 13 thus constitute means for limiting the relative angular inclination between the axes X1, X2 of the joint and the maximum permitted inclination (angle A) is selected so as to ensure correct transmission of the drive between the members that are in mutual contact for values below the preselected threshold and to prevent this threshold being exceeded, thus preventing the possible risk of locking of the joint. Preferred values of the maximum permitted inclination are advantageously selected within a range of values of between 25° and 35°. The provision of the surfaces 12 and 13 thus offers mutual support between the elements of the joint at its maximum aperture, irrespective of the relative spatial orientation of the axes X1, X2, thus ensuring the functional capacity of the joint for any relative positioning of the shafts 2 and 3 imposed by the particular application.

It should also be pointed out that the spherical sectors 9a, 11a are centred on a common centre of the spherical volume of which they form parts; this centre coincides with the virtual centre of rotation of the joint indicated C in Figure 4.

The joint 1 is also provided with a shell-shaped element 14 for containing the portions 9, 11 of the joint with a small radial clearance so as to restrain them with relative coupling of the ball-and-socket type, with a common centre of rotation between the shell 14 and the spherical sectors 9a, 11a.

The shell 14 is preferably formed as two half-shells 14a, 14b of predominantly hemispherical shape which can be connected to one another, for example, by a releasable mechanical coupling. Advantageously, this coupling may have lips 15 for engaging respective recesses 16, for example, formed in opposed pairs on one and on the other of the half-shells, for a restrained mutual connection.

It should be noted that the restraining effect of the shell 14 on the joint elements 4, 5 with relative coupling of the ball-and-socket type is such as to permit the transmission of drive between the shafts 2 and 3 even in the presence of stresses exerted between the shafts and, in particular, in the presence of axial tension or compression stresses.

The shell 14 also has respective openings 17 formed in the region of the axes X1, X2 of rotation of the joint elements to permit the insertion of respective axial ends 18, 19 of these elements. Naturally, the openings 17 are of an extent such as to permit the relative inclination between the joint elements 4,5, up to the maximum permitted inclination (angle A).

The ends 18, 19 have respective attachment elements 18a, 19a for connection to the shafts 2, 3; the attachment elements 18a, 19a have a cylindrical shank-like shape with respective through-holes 18b, 19b. The shanks are arranged for engaging corresponding seats (blind cavities with transverse through-holes) formed at the axial ends of the shafts 2, 3 for the clamping of the shafts onto the joint by means of respective spring cotters 18c, 19c driven into the corresponding holes 18b, 19b. Each shank 18a, 19a also has a flat surface 18d, 19d for a possible different connection of the shafts to the joint, although the above-described embodiment of the attachment represents a preferred selection.

Each portion 9, 11 may also comprise further shoulders 9b, 11b between which a tubular joint cover 20 with a protective function is mounted for containing and covering the shell 14 and the mutually coupled joint elements housed therein.

The shoulders 9b, 11b advantageously have annular grooves 21 for facilitating the clamping of the axial ends of the protective joint cover 20 onto the respective shoulder by means of clamps 22 or similar clamping means.

Finally, it is pointed out that the body 6 and the corresponding spherical sector-shaped portion 9 of the first joint element, 4 may be produced as a unitary part and that the cavity 10 may be formed integrally in the second joint portion 11. As a result, the joint 1 is therefore manufactured with a limited number of parts and, in particular, with four main parts, that is, the joint portions 9 and 11 as well as the two half-shells of the shell 14.

The invention thus achieves the objects proposed, affording many advantages over known solutions.

An advantage which should be pointed out in particular is that, with the joint of the invention, abutment is brought about between the joint elements at the maximum aperture and prevents locking of the joint.

A second advantage is that the joint according to the invention is self-supporting by virtue of the provision of the shell for housing the joint elements with coupling of the ball-and-socket type, enabling axial tensile or compressions stresses also to be transmitted in the same way as a conventional universal joint.

A further advantage lies in the structural simplicity and the ease and rapidity of assembly/dismantling of the joint which are achieved by the provision of a limited number of parts, which are also of small dimensions, for an advantageous overall compactness of the joint.

## Claims

1. A transmission joint for transmitting drive between a first shaft and a second shaft (2, 3), comprising a first joint element and a second joint element (4, 5) which can be mutually coupled for the transmission of the drive between the shafts, each element (4, 5) being rotatable about a respective first or second axis of rotation (X1, X2), the first joint element (4) comprising an approximately spheroidal body (6) formed by a plurality of adjacent segment-like portions (6a) having curved external profile surfaces and defining, transverse the first axis (X1), cross-sections of the body with polygonal outlines, the spheroidal body (6) being able to engage a blind axial cavity (10) of the second joint element (5) having a cross-section, transverse the second axis (X2), with a polygonal outline corresponding to the profile of the body (6) and of dimensions such that the first joint element (4) is housed in the second joint element (5) with mutual torsional coupling and a capability for relative inclination of the axes of the joint elements for the transmission of drive between the said shafts (2, 3) with non-aligned axes, the transmission joint further comprising, on the joint elements (4, 5), means for limiting the relative angular inclination of the axes (X1, X2) of rotation of the joint elements, in order consequently to permit the correct transmission of drive between inclined shafts (2, 3), up to a preselected maximum angular inclination (A), **characterized in that** the first and second joint elements (4, 5) comprise a first portion and a second portion (9, 11) which are shaped as spherical sectors (9a, 11a) forming parts of a common spherical profile of preselected radius, a shell element (14) with a spherical internal surface being provided for containing the spherical-sector-shaped portions (9a, 11a) and restraining them with relative coupling of the ball-and-socket type, with a common centre of rotation between the shell (14) and the spherical sectors (9a, 11a).

2. A joint according to Claim 1 in which the limiting means comprise at least a first surface and a second surface (12, 13) defined on the first and second joint elements (4, 5), respectively, the surfaces (12, 13) being capable of contacting and bearing against one another at the preselected maximum inclination (A) between the axes (X1, X2) the joint elements (4, 5).

3. A joint according to Claim 1 or Claim 2 in which the surfaces (12, 13) are selected with profiles such that, at the maximum inclination (A) between the shafts, they are in mutual contact, tangentially relative to one another, during the transmission of drive between the elements of the joint (4, 5).

4. A joint according to Claim 3 in which one (12) of the surfaces has a flat configuration extending transverse the axis of rotation of the corresponding joint element (4) and the other (13) of the surfaces has a tapered configuration with generatrices that are inclined to a plane perpendicular to the axis of rotation of the corresponding joint element (5) at an angle equal to the selected maximum inclination (A) between the axes of the joint.

5. A joint according to any one of Claims 2 to 4 in which the surfaces (12, 13) are of substantially annular extent and are arranged in positions facing one another for mutual superimposition at the preselected maximum inclination (A) between the axes (X1, X2) of the joint elements (4, 5).

6. A joint according to one or more of the preceding claims in which the shell (14) is made in at least two parts (14a, 14b) of predominantly hemispherical shape.

7. A joint according to any one of Claims 2 to 6 in which the body (6) extends coaxially as an extension of the first portion (9) and the first surface (12) constitutes a shoulder between the first spherical-sector-shaped portion (9) and the body (6).

8. A joint according to Claim 7 in which the first shoulder surface (12) constitutes at least partially a base of the spherical sector (9a) forming the first portion (9).

9. A joint according to one or more of the claims 1 to 5 in which the body (6) and the corresponding spherical-sector-shaped portion (9a, 9) of the first joint element (4) are produced as a unitary part.

10. A joint according to one or more of the claims 1 to 5 in which the cavity (10) is formed coaxially in the second portion (11) of the corresponding joint element (5), the second surface (13) extending around the cavity (10) so as to adjoin the spherical region of the second portion (11).

11. A joint according to Claim 10 in which the cavity (10) and the corresponding spherical-sector shaped portion (11a, 11) of the second joint element (5) are produced as a unitary part.

12. A joint according to one or more f the claims 1 to 5 in which the shell (14) has openings (17) in the region of the axes of rotation (X1, X2) of the joint elements (4, 5) for the insertion of respective axial ends (18, 19) of the joint elements (4, 5) which are arranged for connection to the corresponding drive-transmission shafts (2, 3), the openings (17) being of an extent such as to permit relative inclination between the joint elements (4, 5), up to the preselected maximum inclination (A).

## Patentansprüche

1. Ein Übertragungsgelenk zum Übertragen von Antriebsbewegung zwischen einer ersten Welle und einer zweiten Welle (2, 3), aufweisend ein erstes Gelenkelement und ein zweites Gelenkelement (4, 5), die miteinander verbunden werden können, um die Antriebsbewegung zwischen den Wellen zu übertragen, wobei jedes Element (4, 5) um eine entsprechende erste Achse oder zweite Drehachse (X1, X2) drehbar ist, das erste Gelenkelement (4) einen annähernd kugelähnlichen Körper (6) aufweist, der durch eine Vielheit einander benachbarter, segmentähnlicher Teile (6a) mit Oberflächen mit einem gebogenen Außenprofil gebildet wird, und quer zur ersten Achse (X1) Querschnitte des Körpers mit vieleckigen Umrissen definiert, der kugelähnliche Körper (6) in einen blinden, axialen Hohlraum (10) des zweiten Gelenkelements (5) greifen kann, der quer zur zweiten Achse (X2) einen Querschnitt mit einem vieleckigen Umriss entsprechend dem Profil des Körpers (6) besitzt und so bemessen ist, dass das erste Gelenkelement (4) in das zweite Gelenkelement (5) mit verdrehbarer Verbindung miteinander aufgenommen wird und die Achsen der Gelenkelemente zur Übertragung der Antriebsbewegung zwischen den Wellen (2, 3) mit nicht fluchtenden Achsen relativ zueinander geneigt werden können, wobei das Übertragungsgelenk außerdem auf den Gelenkelementen (4, 5) Einrichtungen zum Begrenzen der relativen Winkelneigung der Drehachsen (X1, X2) der Gelenkelemente aufweist, um damit die korrekte Übertragung der Antriebsbewegung zwischen den geneigten Wellen (2, 3) bis zu einer vorgewählten maximalen Winkelneigung (A) zu erlauben, **dadurch gekennzeichnet, dass** das erste und das zweite Gelenkelement (4, 5) einen ersten Teil und einen zweiten Teil (9, 11) aufweisen, die als kugelförmige Sektoren (9a, 11a), die Teile eines gemeinsamen kugelförmigen Profils mit einem vorgewählten Radius bilden, geformt sind, wobei ein Schalenelement (14) mit einer kugelförmigen Innenfläche zum Aufnehmen der kugelförmigen Sektorteile (9a, 11a) und zu ihrem Festhalten mit relativer Verbindung in der Art eines Kugelgelenks mit einem gemeinsamen Drehmittelpunkt zwischen der Schale (14) und den kugelförmigen Sektoren (9a, 11a) vorgesehen ist.

2. Gelenk gemäß Anspruch 1, bei dem die Begrenzungseinrichtung mindestens eine erste Fläche und eine zweite Fläche (12, 13), die auf dem ersten bzw. dem zweiten Gelenkelement (4, 5) definiert werden, aufweist, wobei die Flächen (12, 13) mit der vorgewählten maximalen Neigung (A) zwischen den Achsen (X1, X2) der Gelenkelemente (4, 5) einander berühren und aneinander anliegen können.

3. Gelenk gemäß Anspruch 1 oder Anspruch 2, bei dem die Flächen (12, 13) mit Profilen ausgewählt werden, sodass sie bei der maximalen Neigung (A) zwischen den Wellen während der Übertragung der Antriebsbewegung zwischen den Elementen des Gelenks (4, 5) tangential zueinander in wechselseitiger Berührung stehen.

4. Gelenk gemäß Anspruch 3, bei dem die eine (12) der Flächen flach ausgebildet ist und sich quer zur Drehachse des entsprechenden Gelenkelements (4) erstreckt und die andere (13) der Flächen eine konische Gestalt mit Mantellinien besitzt, die in einem Winkel entsprechend der gewählten maximalen Neigung (A) zwischen den Achsen des Gelenks zu einer Ebene geneigt sind, die senkrecht zur Drehachse des entsprechenden Gelenkelements (5) steht.

5. Gelenk gemäß irgendeinem der Ansprüche 2 bis 4, bei dem die Flächen (12, 13) im Wesentlichen ringförmig verlaufen und einander zugewandt angeordnet sind, um sich mit der vorgewählten maximalen Neigung (A) zwischen den Achsen (X1, X2) der Gelenkelemente (4, 5) gegenseitig zu überlagern.

6. Gelenk gemäß mindestens einem der vorangegangen Ansprüche, bei dem die Schale (14) aus mindestens zwei Teilen (14a, 14b) von überwiegend halbkugeliger Form besteht.

7. Gelenk gemäß irgendeinem der Ansprüche 2 bis 6, bei dem der Körper (6) sich koaxial als Verlängerung des ersten Teils (9) erstreckt und die erste Fläche (12) eine Schulter zwischen dem ersten kugelförmigen Sektorteil (9) und dem Körper (6) darstellt.

8. Gelenk gemäß Anspruch 7, bei dem die erste Schulterfläche (12) mindestens teilweise eine Basis des den ersten Teil (9) bildenden kugelförmigen Sektors (9a) darstellt.

9. Gelenk gemäß mindestens einem der Ansprüche 1 bis 5, bei dem der Körper (6) und der entsprechende kugelförmige Sektorteil (9a, 9) des ersten Gelenkelements (4) als ein Stück hergestellt sind.

10. Gelenk gemäß mindestens einem der Ansprüche 1 bis 5, bei dem der Hohlraum (10) koaxial im zweiten Teil (11) des entsprechenden Gelenkelements (5) gebildet wird, wobei sich die zweite Fläche (13) so um den Hohlraum (10) erstreckt, dass sie an den kugelförmigen Bereich des zweiten Teils (11) anschließt.

11. Gelenk gemäß Anspruch 10, bei dem der Hohlraum (10) und der entsprechende kugelförmige Sektorteil (11a, 11) des zweiten Gelenkelements (5) als ein Stück hergestellt sind.

12. Gelenk gemäß mindestens einem der Ansprüche 1 bis 5, bei dem die Schale (14) Öffnungen (17) im Bereich der Drehachsen (X1, X2) der Gelenkelemente (4, 5) zum Einstecken der entsprechenden axialen Enden (18, 19) der Gelenkelemente (4, 5) besitzt, die zum Verbinden mit den entsprechenden Wellen (2, 3) zur Übertragung der Antriebsbewegung vorgesehen sind, wobei die Öffnungen (17) so groß sind, dass sie eine relative Neigung zwischen den Gelenkelementen (4, 5) bis zur vorgewählten maximalen Neigung (A) erlauben.

## Revendications

1. Joint de transmission pour transmettre un entraînement entre un premier arbre et un second arbre (2, 3), comprenant un premier élément de joint et un second élément de joint (4, 5) qui peuvent être mutuellement couplés pour la transmission de l'entraînement entre les arbres, chaque élément (4, 5) étant rotatif autour d'un premier ou d'un second axe de rotation (X1, X2) respectif, le premier élément de joint (4) comprenant un corps approximativement sphérique (6) formé par une pluralité de portions adjacentes analogues à des segments (6a) ayant des surfaces externes incurvées profilées et définissant, transversalement au premier axe (X1), des sections transversales du corps avec des contours polygonaux, le corps sphérique (6) étant capable d'engager une cavité axiale borgne (10) du second élément de joint (5) ayant une section transversale, transversalement au second axe (X2), avec un contour polygonal correspondant au profil du corps (6) et avec des dimensions telles que le premier élément de joint (4) est logé dans le second élément de joint (5) avec couplage mutuel en torsion et avec capacité d'inclinaison relative des axes des éléments de joint pour la transmission de l'entraînement entre lesdits arbres (2, 3) lorsque les axes ne sont pas alignés, le joint de transmission comprenant en outre, sur les éléments de joint (4, 5), des moyens pour limiter l'inclinaison angulaire relative des axes (X1, X2) de rotation des éléments de joint, afin de permettre par conséquent la transmission correcte de l'entraînement entre les arbres inclinés (2, 3) jusqu'à une inclinaison angulaire maximum présélectionnée (A), **caractérisé en ce que** le premier et le second élément de joint (4, 5) comprennent une première portion et une seconde portion (9, 11) qui sont mises sous la forme de secteurs sphériques (9a, 11a) formant des parties d'un profil sphérique commun de rayon prédéterminé, un élément de coque (14) avec une surface interne sphérique étant prévue pour contenir les portions en forme de secteur sphérique (9a, 11a) et pour les restreindre avec un couplage relatif du type à bille-et-socle, avec un centre de rotation commun entre la coque (14) et les secteurs sphériques (9a, 11a).

2. Joint selon la revendication 1, dans lequel les moyens de limitation comprennent au moins un une première surface et une seconde surface (12, 13) définies sur le premier et le second élément de joint (4, 5), respectivement, les surfaces (12,13) étant capables de venir en contact et de venir porter l'une contre l'autre à l'inclinaison maximum présélectionnée (A) entre les axes (X1, X2) des éléments de joint (4, 5).

3. Joint selon la revendication 1 ou 2, dans lequel les surfaces (12,13) sont choisies avec des profils tels que, à l'inclinaison maximum (A) entre les arbres, ils se trouvent en contact mutuel, tangentiellement l'un par rapport à l'autre, pendant la transmission de l'entraînement entre les éléments du joint (4, 5).

4. Joint selon la revendication 3, dans lequel l'une des surfaces (12) a une configuration plane qui s'étend transversalement à l'axe de rotation de l'élément de joint correspondant (4), et l'autre des surfaces (13) a une configuration effilée avec des génératrices qui sont inclinées vers un plan perpendiculaire à l'axe de rotation de l'élément de joint correspondant (5) sous un angle égal à l'inclinaison maximum choisie (A) entre les axes du joint.

5. Joint selon l'une quelconque des revendications 2 à 4, dans lequel les surfaces (12, 13) ont une extension sensiblement annulaire et sont arrangées dans des positions qui se font mutuellement face pour une superposition mutuelle à l'inclinaison maximum présélectionnée (A) entre les axes (X1, X2) des éléments de joint (4, 5).

6. Joint selon l'une ou plusieurs des revendications précédentes, dans lequel la coque (14) est réalisée en au moins deux pièces (14a, 14b) de forme principalement hémisphérique.

7. Joint selon l'une quelconque des revendications 2 à 6, dans lequel le corps (6) s'étend coaxialement sous la forme d'une extension de la première portion (9) et la première surface (12) constitue un épaulement entre la première portion en forme de secteur sphérique (9) et le corps (6).

8. Joint selon la revendication 7, dans lequel la première surface en épaulement (12) constitue au moins partiellement une base du secteur sphérique (9a) formant la première portion (9).

9. Joint selon l'une ou plusieurs des revendications 1 à 5, dans lequel le corps (6) et la portion correspondante en forme de secteur sphérique (9a, 9) du premier élément de joint (4) sont produits comme une pièce unitaire.

10. Joint selon l'une ou plusieurs des revendications 1 à 5, dans lequel la cavité (10) est formée coaxialement dans la seconde portion (11) de l'élément de joint correspondant (5), la seconde surface (13) s'étendant autour de la cavité (10) de manière à être adjacente à la région sphérique de la seconde portion (11).

11. Joint selon la revendication 10, dans lequel la cavité (10) et la portion correspondante en forme de secteur sphérique (11a, 11) du second élément de joint (5) sont produits comme une pièce unitaire.

12. Joint selon l'une ou plusieurs des revendications 1 à 5, dans lequel la coque (14) a des ouvertures (17) dans la région des axes de rotation (X1, X2) des éléments de joint (4, 5) pour l'insertion d'extrémités axiales respectives (18, 19) des éléments de joint (4, 5) qui sont arrangées en vue du raccordement aux arbres de transmission correspondants (2, 3), les ouvertures (17) ayant une extension telle qu'elle permet une inclinaison relative entre les éléments de joint (4, 5) jusqu'à l'inclinaison maximum présélectionnée (A).
